Europäisches Patentamt

European Patent Office

Office européen des brevets

(19)

(11) Publication number: **0 007 199**

**B1**

(12) **EUROPEAN PATENT SPECIFICATION**

(45) Date of publication of patent specification: **30.12.86**

(21) Application number: **79301241.0**

(22) Date of filing: **27.06.79**

(51) Int. Cl.⁴: **G 11 B 7/00, H 04 N 5/76**

(54) **Method and apparatus for information retrieval from an optically readable storage medium.**

(30) Priority: **30.06.78 US 920777**

(43) Date of publication of application:
**23.01.80 Bulletin 80/02**

(45) Publication of the grant of the patent:
**30.12.86 Bulletin 86/52**

(84) Designated Contracting States:
**AT BE CH DE FR GB IT LU NL SE**

(56) References cited:
**DE-A-2 657 916**
**DE-A-2 711 923**
**FR-A-2 349 191**
**US-A-3 860 861**
**US-A-4 027 338**

(73) Proprietor: **DISCOVISION ASSOCIATES**
**P.O. Box 6600 3300 Hyland Avenue**
**Costa Mesa California 92626 (US)**

(72) Inventor: **Dakin, Wayne Ray**
**816 Camino Real**
**Nr. 204, Redondo Beach California 90277 (US)**
Inventor: **Ceshkovsky, Lugwig**
**Morning Glory Avenue**
**Fountain Valley, California 92708 (US)**

(74) Representative: **Arthur, George Fitzgerald et al**
**KILBURN & STRODE 30, John Street**
**London WC1N 2DD (GB)**

Courier Press, Leamington Spa, England.

EP 0 007 199 B1

## Description

Videodisc players and the like are known for recovering information that has been stored, for instance, as a succession of light reflective and non-reflective regions along spirally-formed information tracks in a disc-shaped record carrier. The record carrier can be rotated at a relatively high rate, while an optical system is employed for directing a radiant beam, such as a laser beam, to impinge upon the information tracks and for gathering a reflected beam that has been modulated by the reflective and non-reflective regions of the information track. Such a player includes a carriage for translating the videodisc relative to the radiant beam at a rate equal to the pitch of the spirally-recorded tracks and beam steering means for manipulating the radiant beam to precisely follow the path defined by such tracks.

A frequency modulated electrical signal is recovered from the reflected, light modulated beam and is applied to appropriate signal processing circuitry for deriving a video signal for display on a video monitor. Various control signals that are utilized to operate the player are also derived from the reflected beam.

Heretofore, the capability has existed of displaying a selected frame of video information by prescribing the address of the frame or information track wherein it is stored, and causing the carriage to translate in a rapid manner to the vicinity of such information track.

In German Patent Specification No. 2657916 (Telediffusion) such stored addresses identifying the information tracks or frames are used at the beginning of a search mode to identify the track which is being read at the beginning of the search mode. There is then the use of a signal derived from the speed of a motor for driving the carriage across the tracks towards a target track for determining the position of the reader in relation to the disc during the search movement.

In Thomson-Brandt French Specification No. 2349191 the address of a starting track is detected and the difference between that address and the address of a target track is computed, and then in the search mode pulses are counted corresponding to the crossing of successive tracks to position the reader in relation to the target track.

Problems encountered with that sort of search mode has arisen because the carriage tended to travel past the selected track so that the carriage drive had to be reversed to return to it, and it was then frequently necessary to arrange always to approach the target track from one direction when preparing to stop the carriage at that track. Also there is difficulty in monitoring the search mode by counting track crossings as the reader moves in relation to the disc because it is difficult to manufacture discs reliably without eccentricities and particularly at low carriage drive speeds, the eccentricities tend to create false track crossing signals even if the carriage is radially stationary if the usual means for centering the reader on the track in a play mode is disabled. The false track crossings tend not to be significant at high rates of carriage translation, but the method of monitoring by counting track crossings is unreliable at lower speeds of carriage translation. The preambles of claims 1 and 8 are based on the prior art known from DE—A—2657916 or FR—A—2349191.

According to one aspect of the present invention an apparatus for selectively retrieving information stored as set out in the precharacterizing part of claim 1 is characterised in that address recovery means is operative to monitor a modulated read beam to detect updated track addresses from information recovered during at least part of relative radial search movement in a search mode of operation; and in that the rate of relative radial search movement is controlled in a prescribed manner responsive to detected updated address information recovered during said search movement, to reduce the rate of radial movement as a target track is approached.

In one embodiment, there are means for selectively disabling beam steering means upon initiation of the search mode; a monitor for the modulated beam to detect the crossing of individual tracks by the read beam during the search mode; a counter responsive to said monitor and the address of a starting track for computing the address of the track presently being impinged; said comparator being responsive to the disabling means and said counter for comparing the target track address with addresses computed by the counter to produce an indication of the separation between the target track and the incident beam; means for re-enabling the beam steering means at a prescribed threshold; the recovery means being arranged, upon reaching a predetermined relative carriage speed greater than that during the play mode, to recover the address information of the impinged track, and said comparator henceforth comparing the target address with the address recovered by the recovery means to determine when to stop relative movement of said carriage at the target track.

In another embodiment beam steering means is selectively disabled during the search mode and re-enabled at a prescribed separation indication threshold; and control means progressively decrease said rate of relative movement in discrete steps at prescribed thresholds which are dependent upon the difference between the target track address and track addresses recovered in the search mode, the last of said discrete steps producing a radial rate of relative movement the same as that associated with normal playback of the disc in said play mode, and said re-enabling means being operative to re-enable the beam steering means upon initiating said last discrete step, and to maintain enablement of said beam steering means at least until said beam reaches said target track.

Burroughs' U.S. Specification No. 4027338 discloses a search mode in which the crossing of each set of eight tracks can be detected by picking up the least significant digits of the address of one track in that group, which address is then used for counting the crossing of groups of tracks. It is to be noted that Burroughs does not disclose the idea of picking up and identifying address during the search mode which could be used independently of any counting of crossings.

The invention includes the method of selectively retrieving information as set out in claim 9 in which during the search mode the rate of radial search movement is controlled using updated address information recovered during that movement.

The method and apparatus for information retrieval of the present invention satisfies a need for rapid and reliable information retrieval from optically readable tracks by information recovery systems utilizing radiant beam information recovery means.

The above and other objects and advantages of this invention will be apparent from the following more detailed description when taken in conjunction with the accompanying drawings of illustrative embodiments.

Description of the Drawings

In the accompanying drawings:

FIGURE 1 is a generalized block diagram of a videodisc player in which some of the basic concepts of the present invention are illustrated;

FIGURE 2 is a flow chart illustrating an algorithm applicable to the carriage controller shown in FIGURE 1, for varying the carriage speed and direction of movement in the search mode;

FIGURE 3 is a waveform showing the response of the carriage motor as it is driven to a target track in either the forward or the reverse direction;

FIGURE 4 is an electrical schematic of one embodiment of a carriage driver as shown in FIGURE 1 suitable for utilizing the results of the algorithm of FIGURE 2;

FIGURE 5 is a generalized diagram of a signal recovery subsystem, suitable for use with the videodisc player of FIGURE 1; and

FIGURE 6a is a fragmentary cross-sectional view of three information tracks of a videodisc, while FIGURE 6b is a waveform applicable to the signal recovery subsystem of Figure 5.

Detailed Description of the Preferred Embodiment

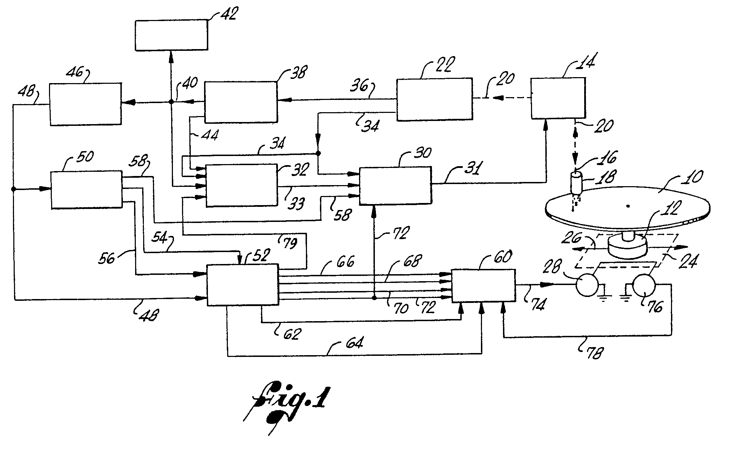

Referring now to FIGURE 1 of the drawings for purposes of illustration, there is shown a new and improved system for information retrieval embodying features of the present invention. In the drawings, the same numeral will be used in the several views to represent the same element.

In FIGURE 1, a generalized videodisc player is shown for purposes of illustrating the principles of the invention and includes a spindle on which a videodisc 10 is mounted for rotation by a spindle motor 12 at a preselected angular rate. Information is recorded on the videodisc 10 is a frequency modulated format as successive light reflective and non-reflective regions along tracks that are formed either as a continuous spiral or in discrete concentric rings. The videodisc player also includes an optical system 14 which produces a laser read beam 16 and directs it through an optical read head 18 having an objective lens for focusing the read beam to a precise spot on the videodisc 10.

A reflected beam 20, modulated by the information recorded in the tracks, is gathered by the read head 18 and returned through the optical system 14 to a signal recovery subsystem 22. The spindle motor 12 is mounted on a carriage 24 for translation of the videodisc 10 in the direction indicated by a double-headed arrow 26 by means of a carriage motor 28. Coarse steering of the read beam 16 along the information tracks is accomplished by translating the carriage 24 either at a uniform rate equal to the pitch of spirally-formed tracks or stepwise if the tracks are formed as discrete concentric rings.

A tracking subsystem 30 is included in the videodisc player to enable the read beam to follow eccentricities that are inherent in the information tracks with present technology. Also, since the description that follows will assume that the information tracks are formed in a spiral manner, wherein one complete revolution of the videodisc comprises one information track, a stop motion subsystem 32 is shown in FIGURE 1 to enable the videodisc player to stop or freeze on a particular track. Both the tracking and stop motion subsystems receive a control signal on line 34 from the signal recovery subsystem 22.

The tracking subsystem 30 is employed for maintaining radial tracking of the focused read beam 16 on one information track, and is responsive to the control signal on line 34 to develop an error signal on line 31 to the optical system 14, indicating the offset from the preferred center-of-track position to the actual position. This tracking error signal is employed for controlling the movement of a radial tracking mirror in the optical system 14 to bring the light spot back onto the center-of-track position.

The tracking subsystem 30 normally operates in a closed loop mode of operation when the player is operating at a play speed. However, the tracking subsystem 30 is disabled in a retrieval mode, such that the differential tracking error is temporarily removed from controlling the operation of the radial tracking mirror. The tracking subsystem 30 can also be temporarily disabled by the stop motion subsystem 32, which then generates various combinations of signals on a line 33 to control the movement of the radial tracking mirror for directing the point of impingement of the focused spot from the preferred center-of-track position on a first track to a center-of-track position on an adjacent track in order to effect stop motion.

The signal recovery subsystem 22 develops an FM signal that includes the video information and all other information stored in the information tracks, and applies that signal on a line 36 to a signal processing subsystem 38. The latter subsystem includes a conventional FM detector for demodulating the FM signal into a standard format video signal, which is then applied on a line 40 to a video monitor 42 for display and to the stop motion subsystem 32. Means are also included in the signal processing subsystem 38 for separating the vertical sync signal from the video signal so that the sync signal can be applied on a line 44 to the stop motion subsystem 32 to be used in a manner described below.

Each information track or frame of video information that is recorded on the videodisc 10 is identified by a unique address encoded once in each of the pair of vertical intervals between the two fields comprising a frame. For purposes of the present invention, the video signal from the signal processing subsystem 38 is also applied on a line 40 to an address recovery subsystem 46, wherein the address associated with each information track is decoded in any manner familiar to those of ordinary skill in the art. These addresses, for instance may be encoded in a selected digital format on a selected horizontal line in each vertical interval.

A signal representing the address information is then directed on a line 48 to a function generator 50 and to a carriage controller 52. The function generator 50, which may be embodied in a remote control, displays the address of the information track currently being read, and includes means for selecting both a retrieval mode of operation and the address of the information track targeted for retrieval, in accordance with the principles of the present invention.

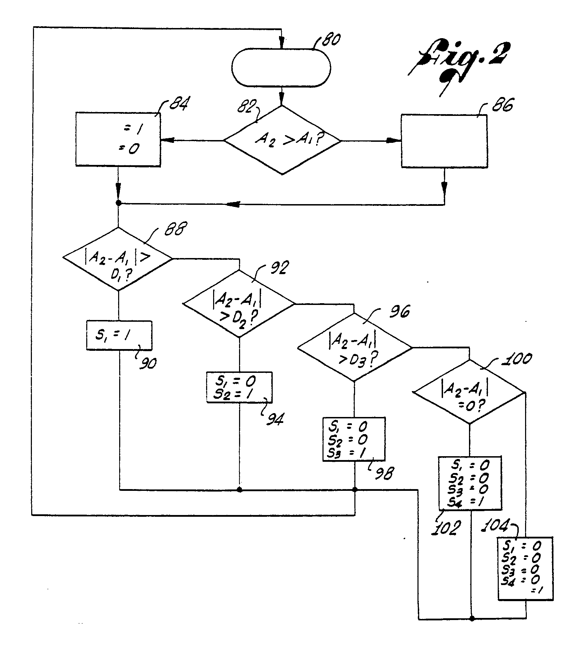

In essence, when the retrieval mode is selected, the function generator 50 applies both an enabling signal on a line 54 and the address of the target track on a line 56 to the carriage controller 52, wherein a comparison of the address of the current track being read with the address of the target track is made and a determination is reached whether the carriage 24 should be driven in a forward or reverse direction to retrieve the target track. Also, the carriage controller 52 prescribes a sequence of drive signals to be applied to a carriage driver 60 in order to move the carriage motor 28, and hence the carriage 24 and the videodisc 10, to retrieve the target track in a rapid manner without overshooting it. The algorithm by which these determinations are made is illustrated in FIGURE 2, and will be described in detail below. The function generator 50 also applies a signal on a line 58 to the tracking subsystem 30 to disable it in the search mode as described above.

The determination of the direction in which the carriage 24 should be driven to reach the target track results in either a forward (FWD) signal being applied from the carriage controller 52 to carriage driver 60 over line 62 or a reverse signal (REV) being applied to the carriage driver on a line 64. In addition, the sequence of signals prescribed by the carriage controller 52, so that the carriage 24 rapidly homes in on the target track, results in one of four carriage drive signals (S1, S2, S3 or S4) being applied to the carriage driver 60 from the carriage controller on one of the lines 66, 68, 70 or 72, respectively. The output of the carriage driver 60 is directed over a line 74 to drive the carriage motor 28, and a tachometer 76 is shown as being mechanically interconnected to the carriage motor to provide an indication of its actual speed and direction by means of a feedback signal on a line 78 to the carriage driver.

The carriage drive signals S1—S4 represent four possible speeds at which the carriage motor 28 can be driven, and hence four rates at which the carriage 24 and the videodisc 10 can be translated relative to the read beam 16. One of these drive signals, S4, corresponds to the normal play speed of the videodisc player which results in translation of the carriage 24 at a rate equal to the recorded pitch of the information tracks. The other drive signals S3, S2 and S1 correspond to successively greater carriage translation rates.

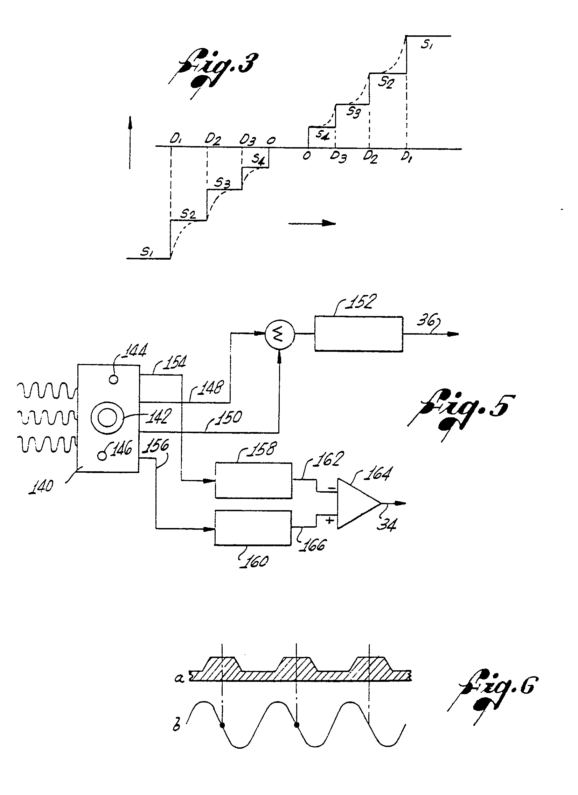

In accordance with the present invention, the carriage controller 52 prescribes a preferred sequence for applying thedrive signals to the carriage motor 28, as a function of the distance between the track currently being read by the player and the track targeted for retrieval in the function generator 50, for retrieval of the information stored in the target track. In this regard, as the carriage moves and the distance to the target track decreases, the drive signal from the carriage driver 60 on line 74 to the carriage motor 28 is sequentially stepped downward as a sequence of distance thresholds, D1, D2 and D3 are crossed. This results in a prescribed deceleration of the carriage motor 28 and hence the carriage 24, as the target track is approached (see FIGURE 3). When the target track is within a prescribed distance, represented by distance threshold D3, the tracking subsystem 30 is re-enabled by a signal on line 72 from the carriage controller 52. Then, as the target track is reached, all drive signals to the carriage driver 60 are set to zero, and the stop motion subsystem 32 is enabled by a signal on line 79 from the carriage controller 52.

Referring now to FIGURE 2, the manner in which the carriage controller 52 determines the direction in which to drive the carriage 24 to retrieve the target track and prescribes an optimum sequence of drive signals is diagrammed. It will be apparent that, in addition to the possibility of implementing the algorithm by means of suitable hardware, such as digital logic elements, all or part of the algorithm may be performed by conventional programming on a digital computer or a microprocessor.

Initiation of a retrieval mode by the function generator 50 commences with a conventional start step 80, followed by a step 82 in which the question is asked whether the address A2 of the target track (target address) is greater than the address A1 of the track currently being read by the videodisc player (current address). An affirmative answer to this question indicates that the proper direction to drive the carriage 24 to retrieve the target track is forward and leads to step 84, resulting in the forward signal on line 62 being set to a true state (FWD = 1), while the reverse signal on line 64 is set to a false signal (REV = 0). If the answer is no, then the forward signal on line 62 and the reverse signal on line 64 are set to the false (FWD = 0) and the true (REV = 1) states, respectively, by step 86.

Once the direction that the carriage is to be driven has been fixed either by step 84 or by step 86, a sequence of steps are utilized to determine the distance D to be traversed to the target track, as represented by the absolute magnitude of the difference between the target address A2 and the current address A1.

More specifically, with reference to FIGURE 2, the question is asked at step 88 whether the distance D is greater than the first distance threshold D1 from the target track. If the answer is yes, then the drive signal S1 on line 66 is set to a true state (S1 = 1) in step 90, resulting in the carriage motor 28 being driven at a particular speed. Since the distance threshold D1 represents the greatest distance to the target track, the drive signal S1 is selected to cause the carriage motor 28 to operate at its fastest available speed until the next distance threshold D2 is reached. On the other hand, if the answer to the question posed in step 88 is no, then the carriage motor 28 will be driven at a prescribed speed less than the maximum in order that the carriage motor not be driven at such a rate that it could not be stopped without overshooting the target track. Initially, the answer to the question posed in step 88 may be no, of course, if the current track being read when the search mode commences is closer to the target track than the distance threshold D1.

As mentioned previously, eccentricities in the videodisc 10, which are unavoidable with present technology, require utilization of a tracking subsystem 30 such as that shown in FIGURE 1 to accomplish fine steering of the read beam to accurately follow the path of the information tracks in a play mode of operation. It was also noted, however that in a retrieval mode of operation as described herein, the tracking subsystem 30 is disabled. Notwithstanding this disablement of the tracking subsystem 30, a certain amount of FM information is recovered from the videodisc 10 and provided to the signal recovery subsystem 22 as the read beam 16 rapidly crosses tracks in the search mode.

The invention is based on the discovery that, although the FM information recovered from the disc is such that the video monitor 42 cannot provide a stable display, sufficient information will be recovered at various intervals to derive the addresses of some tracks as they are crossed. In this regard, identical address information is diametrically encoded for each track, in the vertical interval associated with each field comprising a frame, so that there will be an opportunity to recover address information every half revolution of the disc. If the videodisc is rotating at a typical 1800 r.p.m., this will occur once approximately every 16 milliseconds. It is contemplated, therefore, that the algorithm of FIGURE 2 be repeated upon each updating of the current address A1, typically at intervals of 16 msec. Thus, after step 90, as well as all other steps wherein a drive signal is set, the algorithm returns to the start step 80 in anticipation of updated information respecting the current address A1.

When the answer to step 88 is no, either because the target track is initially closer to the current track being read than the distance threshold D1, or because the carriage 24 has been driven closer in the search mode at the maximum speed represented by the drive signal S1, the question is posed by step 92 whether the distance D is greater than the next distance threshold D2. If the answer is yes, then the drive signal S1 on line 66 is set to a false state (S1 = 0) and the drive signal S2 on line 68 is set to a true state (S2 = 1) by step 94. Consequently, the carriage motor 28 will be driven at a speed corresponding to the drive signal S2, and the carriage controller will remain in this state until the next distance threshold D3 is reached.

From the foregoing, it should now be apparent that a primary purpose of sequentially down stepping the drive signal applied to the carriage driver 60 is to decelerate the carriage motor 28 in a relatively predictable fashion and to intermittently redetermine the speed of the motor as the carriage approaches the target track. In this manner, the effects of variability in the dynamic characteristics of particular carriage motors and carriages is minimized by selecting the drive signals and distance thresholds to allow intermittent redetermination of carriage position and speed during the course of homing in on the target track. As a result, the carriage is driven towards the target as rapidly as practicable without overexciting the carriage motor and possibly experiencing overshoot.

To complete the algorithm, the question is posed at step 96 whether the distance D is greater than the third distance threshold D3 to the target track and, if the answer is yes, the preceding drive signals S1 and S2 are set to a false state (S1 = 0, S2 = 0), and the drive signal S3 that is applied on line 70 from the carriage controller 52 to the carriage driver 60 is set to a true state (S3 = 1) by step 98. When the distance D finally becomes less than the third distance threshold D3, but is still greater than zero, as determined by the next question posed in step 100, the fourth drive signal S4 is set to a true state (S4 = 1), and all previous drive signals S1, S2 and S3 are set to a false state (S1 = 0, S2 = 0, S3 = 0) by step 102.

It will be recalled that in the presently preferred embodiment, the carriage motor speed represented by the drive signal S4 is chosen to be the normal play speed of the videodisc player in which the carriage 24 is translated at a rate equal to the pitch of the spiral tracks formed on the videodisc 10. Therefore, the drive signal S4 is also applied on line 72 to the tracking subsystem 30 in order to re-enable it upon re-establishing play speed, since the tracking subsystem 30 was disabled by a signal on line 58 from the function generator 50 upon initiation of the search mode. This was because the various sequential drive signals S1, S2 and S3 all cause the carriage 24 to translate at rates greater than the normal play speed represented by the drive signal S4. At these higher translation rates, it is neither practical nor desirable to attempt to fine steer the read beam 16 as tracks are rapidly crossed. Of course, when the drive signal S4 is applied, the tracking subsystem 30 preferably is re-enabled so that the read beam 16 will most accurately follow the information tracks and track addresses can be reliably retrieved.

Finally, when the difference D becomes zero, making the answer to the question posed in step 100 yes, all previous drive signals S1, S2, S3 and S4 are set to a false state (S1 = 0, S2 = 0, S3 = 0 and S4 = 0) by step 104. Of course, with all the drive signals S1—S4 set to a false state, the carriage 24 will stop. At the same time, a stop signal on a line 79 to the stop motion subsystem 32 is set to a true state (STOP = 1) by step 104. The purpose of this stop signal is to enable the stop motion subsystem 32 such that the target track will be frozen on the display of the video monitor 42. Since the information tracks are recorded in spiral fashion, it is required that read beam 16 be jumped back once each revolution of the videodisc 10 so that the read beam repeatedly retraces the same frame of video information. A particular manner of generating an appropriate jump-back signal and controlling the tracking subsystem employs the detection of a jump-back white flag inserted into each frame suitable for stop motion purposes.

Briefly, the stop motion subsystem 32 is employed as a means for generating a plurality of control signals for application to the tracking subsystem 30 on line 33 to achieve the movement of the focused spot tracking the center of a first information track to a separate and spaced location in which the spot begins tracking the center of the next adjacent information track. The stop motion subsystem 32 performs its function by detecting a predetermined signal recovered from the frequency modulated video signal which indicates the proper position within the recovered frequency modulated video signal for initiating the jumping operation. This detection function is achieved, in part, by internally generating a gating circuit conditioned by the vertical sync signal received on line 44 to indicate that portion of the recovered video signal received on line 40, within which the predetermined signal should be located.

In response to the predetermined signal, which has been termed a "white flag" in the aforementioned related application, the stop motion subsystem 32 generates a first control signal for application to the tracking subsystem 30 for temporarily interrupting the application of the differential tracking error to the radial tracking mirrors in the optical system 14. The stop motion subsystem 32 generates a second control signal for application to the radial tracking mirrors for causing the radial tracking mirrors to leave the center of tracking position on a first information track and jump to an adjacent information track. The stop motion subsystem terminates the second control signal prior to the focused spot reaching the center of focus position on the next adjacent information track.

A third control signal may be generated by the stop motion subsystem 32 at a time spaced from the termination of the second control pulse. The third control pulse is applied directly to the radial tracking mirrors for compensating for the effects on it which were added by the second control pulse. While the second control pulse is necessary to have the reading beam jump from a first information track to an adjacent information track, the spaces involved are so small that the jumping operation cannot always reliably be achieved using the second control signal alone. Therefore, the third control signal may be employed for compensating for the effects of the second control jump pulse on the radial tracking mirror at a point in time when it is assured that the focus spot has, in fact, left the first information track and has yet to be properly positioned in the center of the next adjacent information track. Finally, the differential error signal may be gated through to the radial tracking mirror at a time calculated for the gated portion of the differential tracking error to assist the compensation pulse in bringing the focused spot under control upon the center-of-track position of the next adjacent information track.

Referring now specifically to FIGURE 3, control of the carriage motor drive signal, and hence carriage motor speed, as a function to the distance D to the target track, is illustrated by waveforms, including approaches from both the forward and the reverse directions.

Assuming for the moment that the carriage 24 is positioned further from the target track than the distance threshold D3 and should be driven in the forward direction to reach the target track, it can be seen that the maximum drive signal S1 is initially applied to the carriage driver 60 so that the carriage motor 28 will assume its maximum available speed. As the carriage 24 approaches the distance threshold D3, the drive signal applied to the carriage driver 60 steps down to S2. Of course, the carriage motor 28 and the carriage 24 have a certain amount of inertia and the speed decays to a speed dictated by the drive signal S2 over a period of time. Preferably, the dynamic characteristics of the carriage motor 28 and the carriage 24 are critically damped so that a speed represented by the drive signal S2 is reached as quickly as possible.

It should be noted that, in any event, the dynamic characteristics of the carriage motor 28 and carriage 24, as well as the distance thresholds such as D3 and D2, should be chosen so that the carriage motor speed does decay to the speed represented by the drive signal S2 prior to the carriage reaching the next distance threshold D2. Otherwise, the purpose of stepping down the drive signal to the carriage driver in order to redetermine the carriage motor speed at particular intervals along route to the target track will be defeated. Those skilled in the art will recognize that particular carriage motors and carriages will display a certain amount of variability in their dynamic response characteristics and that the various drive signals and distance thresholds should be selected with this variability in mind, *i.e.*, sufficient distance between thresholds should be allowed so that even a carriage motor and assembly with a relatively slow time response will decelerate to the speed represented by the next drive signal prior to the next distance threshold being reached.

This process of stepping down the drive signal and allowing the speed of the carriage motor 28 to substantially completely decay before again stepping down the drive signal at the next distance threshold is repeated until the normal play speed represented by drive signal S4 is reached and the tracking subsystem 30 is re-enabled. Then as the carriage 24 reaches the target track, the carriage 24 is stopped and the stop motion subsystem 32 is enabled as described above.

For purposes of convenience, the identical sequence of drive signals and distance thresholds is shown for implementation when the target track must be approached in the reverse direction. For particular systems, it may be that the carriage motor and the carriage will display differing response characteristics in the forward and the reverse directions, in which case a different sequence of drive signals and distance thresholds would be selected. It will also be appreciated that the particular number of drive signals and distance thresholds in the sequence is not critical to the present invention.

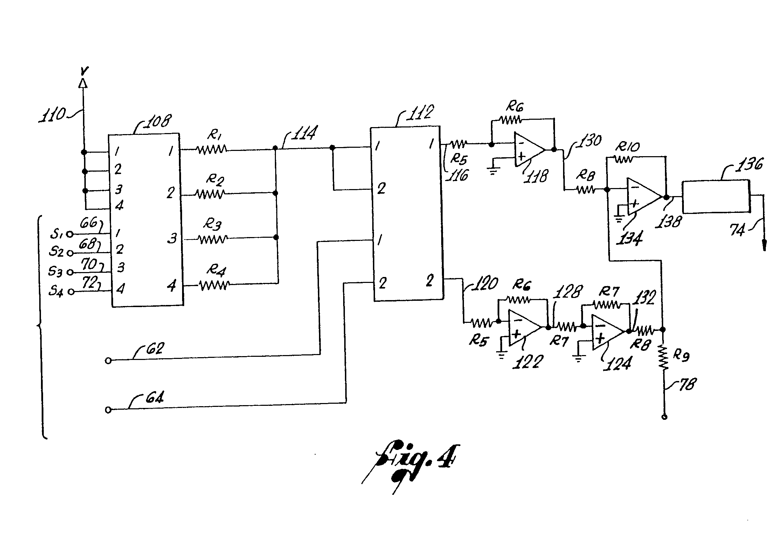

A particular electrical circuit for implementing the carriage driver is shown in FIGURE 4. The circuit includes a first quad analog switch 108 having four IN, OUT and CONTROL connections. The drive signals S1—S4 are applied individually to the four CONTROL connections on the lines 66, 68, 70 and 72, while the four IN connections ared tied to a positive supply voltage V on a line 110. The four OUT connections are each connected individually through a resistor R1—R4, respectively, to the first two IN connections of a second quad analog switch 112 on a line 114. The second switch 112 receives its corresponding two CONTROL inputs individually from the forward and reverse signals on lines 62, 64 from the carriage controller 52. Only two connections are utilized on the second analog switch 112. A suitable commercial device for these two quad analog switches is a Motorola type MC14016.

The first OUT connection of the second analog switch 112 is applied through a resistor R5 on line 116 to the inverting input of a first operational amplifier 118 having a feedback resistor R6. The second OUT connection of the second analog switch 112 is likewise applied through an equivalent resistor R5 on line 120 to the inverting input of a second operation amplifier 122, having an identical feedback resistor R6. The output of the second operational amplifier 122 is then applied to the inverting input of a third operational amplifier 124 through a resistor R7 on a line 128, the operational amplifier having an identical feedback resistor R7 to provide unity gain.

The operation of this circuit as thus far described will now be explained. Depending on which, if any, of the drive signals S1—S4 is in a true state, the corresponding OUT connection of the first analog switch will have the supply voltage V applied to it. Thus, a current will be supplied through a particular resistor, such as resistor R1 when drive signal S1 is set to a true state (S1 = 1), to the two IN connections on the second analog switch 112 on line 114. This current will be directed through either one of the two OUT connections of the second switch 112 depending on which of its two control signals, the forward or reverse signals from the carriage controller 52, are in a true state. Hence, the current will cause an inverted voltage to appear at the output of the first operational amplifier 118 if the forward signal is true (FWD = 1). On the other hand, a noninverted voltage will appear at the output of the third operational amplifier 124 if the reverse signal is true (REV = 1).

One of these two voltages are then applied through identical resistors R8 on lines 130 or 132 for summing with the feedback signal from the carriage tachometer 76 through a resistor R9 on line 78, at the inverting input of a fourth operational amplifier 134, having a feedback resistor R10. The output of this fourth operational amplifier 134 is then applied to a power amplifier 136 on a line 138 for appropriately energizing the carriage motor 28 over a line 74 in the forward or the reverse direction. In accordance with well-known principles, the carriage tachometer 76 is intended to generate an equal and opposite signal to the drive signal from the first operational amplifier 118 or the third operational amplifier 124, as the case may be, to null the input at the fourth operational amplifier 134, *i.e.*, negative feedback control.

An alternative approach for determining carriage location or distance D from the target track can be described with reference to FIGURES 5 and 6.

A suitable subsystem for implementing the signal recovery subsystem shown in FIGURE 1, is disclosed in FIGURE 5. A diode detector array 140 includes a central photodetector 142 for deriving the informational content of the modulated light beam and has a pair of diametrically opposed tracking diodes 144, 146 on either side. An electrical signal proportional to the intensity of light received on the central detector 142 is provided on lines 148, 150 to a summing junction and then to a wide band amplifier 152, having an output directed on line 36 to the signal processing subsystem 38 as described above. Each tracking diode 144, 146 is disposed to detect the portion of the modulated light beam corresponding to individual tracking spots, which are produced by splitting the read beam 16 into three separate beams by means of a diffraction grating in the optical system 14, and each diode generates an electrical signal on lines 154 and 156, respectively, to tracking preamplifiers 158, 160. One preamplifier 158 has an output directed on a line 162 to the inverting input of an amplifier 164 and the output of the other preamplifier 160 is directed on a line 166 to the noninverting input of the amplifier. The output of the amplifier 164 then provides a tracking error signal on line 34 to the tracking subsystem 30 and to the stop motion subsystem 32 as described in connection with FIGURE 1.

A fragmentary radial cross section of three tracks of the videodisc are illustrated in FIGURE 6a; while in FIGURE 6b, the open loop differential tracking error signal is illustrated which appears on line 34 at the output of differential amplifier 164 when the tracking subsystem 30 is disabled and the carriage translates rapidly in a search mode of operation.

It will be apparent that the waveform of FIGURE 6b can be utilized as an indicator of track crossings and to provide a count of the number of tracks crossed in the search mode. Considering this information in combination with the target address A2 and the address of the particular track from which the search is initiated, a continuous monitoring of carriage position relative to the target track could be derived by counting track crossings. It should be noted, however, that such a technique would be preferable only at relatively high speeds of translation of the carriage. This is because the eccentricities inherent in a videodisc tend to create false "track crossings" even when the carriage is standing still, if the tracking subsystem is disabled. At high rates of translation of the carriage, the effects of these false "track crossings" due to eccentricities will not be significant, but as the speed of the carriage slows towards a play speed their effects may prevent an accurate track count. Hence, in an alternative embodiment, it is contemplated that track crossings may be counted by means of the open loop differential tracking error signal at relatively high rates of speed, while dependence will be shifted to detection of addresses as the carriage speed approaches play speed.

In a suitable case where search speed is not too high, track crossings need not be counted at all, but the detection of addresses during search can be used throughout.

The aforedescribed information retrieval system of the present invention satisfies a need for improved systems capable of rapidly accessing information tracks in apparatus for the type utilising a radiant beam to optically read the information stored in such tracks.

It will be apparent from the foregoing that, while particular forms of the invention have been illustrated and described, various modifications can be made without departing from the spirit and scope of the invention. Accordingly, it is not intended that the invention be limited, except as by the appended claims.

Although in the particular example described with reference to FIGURE 1, there is a turntable for rotating a video disc 10, the invention is equally applicable to a recording medium having straight parallel information tracks, rather like the lines on a page of printing. Movement between the reading beam and the medium would be transverse to the length of the tracks both at the end of a track during normal reading and during more rapid movement to a selected target track.

Prior proposals by the present Applicants are the subject of European Patent Application Nos. 79300487.0, 79300489.6 and 79300490.4 (Publication numbers 4476, 4738, 5316). A divisional application (Publication number 181436) has been filed.

## Claims

1. Apparatus for selectively retrieving information stored on an information storage disc which carries a plurality of optically readable information tracks including addresses uniquely identifying each information track, said apparatus comprising: means (50) for selecting a target address corresponding to a target track from which information is to be retrieved in the play mode of operation; means (19) for impinging an incident beam of radiation upon the disc and along said tracks; means (22) for recovering information from a modulated beam of radiation produced thereby in the play mode of operation; address recovery means (46) for extracting current address information from the information recovered from the disc; means (28) for moving the storage disc and the incident beam of radiation relative to one another radially of the disc at a rate greater than that during the play mode to cause the incident beam to move across the tracks in a search mode of operation; a comparator (52) for comparing the target track address from said selecting means (50) with an address updated with current address information from said address recovery means (46) to define a separation indication; and control means (60) responsive to said comparator (52) for controlling the rate of relative movement to reduce said rate as the separation decreases in a prescribed manner; characterized in that said address recovery means (46) is operative to monitor the modulated beam to detect updated track addresses from information recovered during at least part of the relative radial search movement; and in that the rate of relative movement is controlled in the prescribed manner responsive to detected updated address information recovered during said search movement.

2. Apparatus according to Claim 1, comprising: beam steering means (30) for manipulating said incident beam to follow the information tracks during the play mode; a carriage (24) arranged to cause said relative movement between the incident beam and the disc to cause the incident beam to move from track to track in the search mode; means (58) for selectively disabling the beam steering means upon initiation of the search mode; a monitor (140, 164) for the modulated beam to detect the crossing of individual tracks by said incident beam during the search mode; a counter responsive to said monitor and the address of said starting track for computing the address of the track presently being impinged; said comparator being responsive to said selecting means (50) and said counter for comparing the target track address with addresses computed by the counter to produce an indication of the separation between the target track and the incident beam; means (54) for re-enabling the beam steering means at a prescribed threshold; and upon reaching a predetermined relative carriage speed greater than that during the play mode, said recovery means recovering the address information of the impinged track, and said comparator henceforth comparing the target address with the address recovered by the recovery means to determine when to stop relative movement of said carriage at the target track.

3. Apparatus according to claim 1, comprising: beam steering means (14, 30) for manipulating said incident beam to follow the information tracks during the play mode; means (58) for selectively disabling the beam steering means during the search mode and re-enabling the beam steering means at a prescribed separation indication threshold; said control means (60) including means (66—72, 108) for progressively decreasing said rate of relative movement in discrete steps at prescribed thresholds which are dependent upon the difference between the target track address and track addresses recovered in the search mode, the last of said discrete steps producing a radial rate of relative movement the same as that associated with normal playback of the disc in said play mode, and said re-enabling means (58) being operative to re-enable the beam steering means upon initiating said last discrete step, and to maintain enablement of said beam steering means at least until said beam reaches said target track.

4. Apparatus as claimed in Claim 1 wherein said control means decreases the rate of relative movement in a stepwise fashion at prescribed separation thresholds.

5. Apparatus as claimed in Claim 1 including means (3) arranged when the target address is detected, to cause a stop motion mode in which the incident beam repeatedly reads one addressed turn of a spiral track.

6. Apparatus as claimed in Claim 3 characterized in that said address recovery means (46) is arranged to detect a starting address corresponding to a track from which information is being recovered in a play mode before a search mode is initiated.

7. Apparatus as claimed in Claim 3 or 6, characterized by means (32) arranged when the target address is detected by the address recovery means to cause a stop motion action in which the incident beam repeatedly reads the addressed tracks.

8. Apparatus as claimed in any of Claims 3, 6, or 7 in combination with a disc carrying on one surface circular or spiral concentric information cracks and constituting the information storage disc.

9. A method for selectively retrieving information stored on an information storage disc which carries a plurality of optically readable information tracks including addresses uniquely identifying each information track, said method comprising the steps of: selecting a target address corresponding to a target track from which information is to be retrieved in the play mode of operation; impinging an incident beam of radiation upon the disc and along said tracks; recovering information from a modulated beam of radiation produced thereby in the play mode of operation; extracting current address information from the information recovered from the disc; moving the storage disc and the incident beam of radiation relative to one another radially of the disc at a rate greater than that during the play mode to cause the incident beam to move across the tracks in a search mode of operation; comparing the selected target track addresses with an address updated with current address information from said extracting step to define a separation indication; and controlling the rate of relative movement to reduce said rate as the separation decreases in a prescribed manner; characterized by the steps of: monitoring the modulated beam to detect updated track addresses from information recovered during at least part of the relative radial search movement; and controlling the rate of relative movement in the prescribed manner responsive to detected updated address information recovered during said search movement.

10. The method according to Claim 9, comprising the steps of: detecting and counting the crossing of individual tracks by said incident beam during the search modes; computing the address of the track presently being impinged from the address of the starting track and the count of the number of tracks crossed in the search mode; comparing the target track address with addresses computed in said computing step to produce an indication of the separation between the target track and the incident beam; decreasing the rate of movement of the carriage as the separation decreases; and upon reaching a predetermined rate of said relative movement, still greater than that during the play mode, recovering the address information of the impinged track, and henceforth comparing the target track address with the address recovered in said monitoring step to determine when to stop said relative movement to position the incident beam at the target track.

11. The method according to Claim 9, wherein said moving step is characterized by the step of decreasing said rate of relative movement in a stepwise fashion at prescribed separation thresholds.

**Patentansprüche**

1. Vorrichtung zum selektiven Wiederauffinden von Information, die auf einer Informationsspeicherplatte gespeichert ist, die eine Vielzahl von optisch lesbaren Informationsspuren trägt, die Adressen enthalten, die jede Informationsspur eindeutig identifizieren, welche Vorrichtung aufweist: Mittel (50) zum Auswählen einer Zieladresse entsprechend einer Zielspur, von der Information in der Wiedergabebetriebsart wiederaufgefunden werden soll; Mittel (19) zum Auftreffenlassen eines einfallenden Strahlenbündels auf die Platte und längs der Spuren; Mittel (22) zur Wiedergewinnung von Information von einem dadurch in der Wiedergabebetriebsart erzeugten modulierten Strahlenbündel; Adressenwiedergewinnungsmittel (46) zum Abtrennen laufender Adresseninformation aus der von der Platte wiedergewonnenen Information; Mittel (28) zum Bewegen der Speicherplatte und des einfallenden Strahlenbündels relativ zueinander in radialer Richtung der Platte mit einer Geschwindigkeit, die größer ist als jene während der Wiedergabebetriebsart, um das einfallende Bündel zu veranlassen, sich quer zu den Spuren in einer Suchbetriebsart zu bewegen; einen Komparator (52) zum Vergleichen der Zielspuradresse aus den Auswählmitteln (50) mit einer mit laufender Adresseninformation aus den Adressenwiedergewinnungsmitteln (46) aktualisierten Adresse, um eine Abstandsanzeige zu definieren; und auf den Komparator (52) ansprechende Steuermittel (60) zur Steuerung der Geschwindigkeit der Relativbewegung, um diese Geschwindigkeit herabzusetzen, wenn der Abstand in einer vorgeschriebenen Weise abnimmt; dadurch gekennzeichnet, daß die Adressenwiedergewinnungsmittel (46) wirksam sind, um das modulierte Bündel zu überwachen, um aktualisierte Spuradressen aus der während wenigstens eines Teiles der radialen Relativsuchbewegung wiedergewonnenen Information zu detektieren; und daß die Geschwindigkeit der Relativbewegung in der vorgeschriebenen Weise in Ansprechen auf die detektierte aktualisierte Adresseninformation gesteuert wird, die während dieser Suchbewegung wiedergewonnen wird.

2. Vorrichtung nach Anspruch 1, mit: Bündelsteuermitteln (30) zum Beeinflussen des einfallenden Bündels, um während der Wiedergabebetriebsart den Informationsspuren zu folgen; einem Schlitten (24), der angeordnet ist, um die Relativbewegung zwischen dem einfallenden Bündel und der Platte zu bewirken, um das einfallende Bündel zu veranlassen, sich in der Suchbetriebsart von Spur zu Spur zu bewegen; Mitteln (58) zum selektiven Unwirksammachen der Bündelsteuermittel bei Einleitung der Suchbetriebsart; einem Überwachungsgerät (140, 164) für das modulierte Bündel, um das Queren einzelner Spuren durch das einfallende Bündel während der Suchbetriebsart zu detektieren; einem auf das Überwachungsgerät und die Adresse der Startspur ansprechenden Zähler zur Berechnung der Adresse der gerade getroffenen Spur; wobei der Komparator auf die Auswählmittel (50) und den Zähler anspricht, um die Zielspuradresse mit vom Zähler berechneten Adressen zu vergleichen, um eine Anzeige für den Abstand zwischen der Zielspur und dem einfallenden Bündel zu erzeugen; Mitteln (54) zum Wiederfreigeben der Bündelsteuermittel bei einem vorgeschriebenen Schwellenwert; und wobei bei Erreichen einer vorherbestimmten relativen Schlittengeschwindigkeit größer jener während der Wiedergabebetriebsart die Wiedergewinnungsmittel die Adresseninformation der gegroffenen Spur wiedergewinnen undder Komparator von da an die Zieladresse mit der von den Wiedergewinnungsmitteln wiedergewonnenen Adresse vergleicht, um festzustellen, wann die Relativbewegung des Schlittens bei der Zielspur anzuhalten ist.

3. Vorrichtung nach Anspruch 1, mit: Bündelsteuermitteln (14, 30) zum Beeinflussen des einfallenden Bündels, um den Informationsspuren während der Wiedergabebetriebsart zu folgen; Mitteln (58) zum selektiven Unwirksammachen der Bündelsteuermittel während der Suchbetriebsart und zum Wiederfreigeben der Bündelsteuermittel bei einem vorgeschriebenen Abstandsanzeigeschwellenwert; wobei die Steuermittel (60) Mittel (66—72, 108) zum fortschreitenden Herabsetzen der Geschwindigkeit der Relativbewegung in diskreten Stufen bei vorgeschriebenen Schwellenwerten enthält, die vom Unterschied zwischen der Zielspuradresse und den in der Suchbetriebsart wiedergewonnenen Spuradressen abhängen, wobei die letze der diskreten Stufen zu einer Radialgeschwindigkeit der Relativbewegung führt, die gleich ist jener bei der normalen Wiedergabe der Platte in der Wiedergabebetriebsart, und die Wiederfreigabemittel (58) wirksam sind, um die Bündelsteuermittel bei Einleiten dieser letzten Stufe wiederfreizugeben und die Freigabe der Bündelsteuermittel zumindest solange beizubehalten, bis das Bündel die Zielspur erreicht.

4. Vorrichtung nach Anspruch 1, worin die Steuermittel die Geschwindigkeit der Relativbewegung stufenweise bei vorgeschriebenen Abstandsschwellenwerten herabsetzen.

5. Vorrichtung nach Anspruch 1, mit Mitteln (32), die eingerichtet sind, um bei Detektieren der Zieladresse eine Bewegungsstop-Betriebsart zu bewirken, in der das einfallende Bündel einen adressierten Gang einer Spiralspur wiederholt ausliest.

6. Vorrichtung nach Anspruch 3, dadurch gekennzeichnet, daß die Adressenwiedergewinnungsmittel (46) eingerichtet sind, um eine Startadresse entsprechend einer Spur zu detektieren, von der in einer Wiedergabebetriebsart vor Einleiten einer Suchbetriebsart Information wiedergewonnen wird.

7. Vorrichtung nach Anspruch 3 oder 6, gekennzeichnet durch Mittel (32), die eingerichtet sind, um bei Detektieren der Zieladresse durch die Adressenwiedergewinnungsmittel eine Bewegungsstop-Betriebsart zu bewirken, in der das einfallende Bündel die adressierten Spuren wiederholt ausliest.

8. Vorrichtung nach einem der Ansprüche 3, 6 oder 7, in Kombination mit einer Platte, die auf einer Fläche kreis- oder spiralförmige konzentrische Informationksspuren trägt und die Informationsspeicherplatte bildet.

9. Verfahren zum selektiven Wiederauffinden von Information, die auf einer Informationsspeicherplatte gespeichert ist, die eine Vielzahl von optisch lesbaren Informationsspuren trägt, die Adressen enthalten, die jede Informationsspur eindeutig identifizieren, welches Verfahren die Schritte aufweist: Auswählen einer Zieladresse entsprechend einer Zielspur, von der Information in der Wiedergabebetriebsart wiederaufgefunden werden soll; Auftreffenlassen eines einfallenden Strahlenbündels auf der Platte und längs der Spuren; Wiedergewinnen von Information von einem dadurch in der Wiedergabebetriebsart erzeugten modulierten Strahlenbündel; Abtrennen laufender Adresseninformation aus der von der Platte wiedergewonnenen Information; Bewegen der Speicherplatte und des einfallenden Strahlenbündels relativ zueinander in radialer Richtung der Platte mit einer Geschwindigkeit, die größer ist als jene während der Wiedergabebetriebsart, um das einfallende Bündel zu veranlassen, sich quer zu den Spuren in einer Suchbetriebsart zu bewegen; Vergleichen der ausgewählten Zielspuradresse mit einer mit laufender Adresseninformation vom Abtrennschritt aktualisierten Adresse, um eine Abstandsanzeige zu definieren; und Steuern der Geschwindigkeit der Relativbewegung, um diese Geschwindigkeit herabzusetzen, wenn der Abstand in einer vorgeschriebenen Weise abnimmt; gekennzeichnet durch die Schritte: Überwachen des modulierten Bündels, um aktualisierte Spuradressen aus der während wenigstens eines Teiles der radialen Relativsuchbewegung wiedergewonnenen Information zu detektieren; und Steuern der Geschwindigkeit der Relativbewegung in der vorgeschriebenen Weise in Ansprechen auf die detektierte aktualisierte Adresseninformation, die während dieser Suchbewegung wiedergewonnen wird.

10. Verfahren nach Anspruch 9 mit den Schritten: Detektieren und Zählen des Querens einzelner Spuren durch das einfallende Bündel während der Suchbetriebsarten; Berechnen der Adresse der gerade getroffenen Spuren aus der Adresse der Startspur und der Zählung der Anzahl der in der Suchbetriebsart gequerten Spuren; Vergleichen der Zielspuradresse mit den im Berechnungsschritt berechneten Adressen, um eine Anzeige für den Abstand zwischen der Zielspur und dem einfallenden Bündel zu erzeugen; Herabsetzen der Geschwindigkeit der Bewegung des Schlittens, wenn der Abstand abnimmt; und Wiedergewinnen der Adresseninformation der getroffenen Spur bei Erreichen einer vorherbestimmten Geschwindigkeit der Relativbewegung, die noch größer ist als jene während der Wiedergabebetriebsart, und von da an erfolgendes Vergleichen der Zielspuradresse mit der im Überwachungsschritt wiedergewonnenen Adresse, um festzustellen, wann die Relativbewegung anzuhalten ist, um das einfallende Bündel auf der Zielspur zu positionieren.

11. Verfahren nach Anspruch 9, bei dem der Bewegungsschritt gekennzeichnet ist durch den Schritt des stufenweisen Herabsetzens der Geschwindigkeit der Relativbewegung bei vorgeschriebenen Abstandsschwellenwerten.

**Revendications**

1. Dispositif pour reproduire sélectivement l'information stockée sur un disque de stockage de l'information qui porte un certain nombre de pistes lisibles par voie optique de l'information comprenant des adresses identifiant de manière unique chaque piste de l'information, ledit dispositif comprenant: un moyen (50) pour choisir une adresse voulue correspondant à une piste voulue d'où l'information doit être reproduite en mode de restitution; un moyen (19) pour provoquer l'impact d'un faisceau incident de rayonnement sur le disque et le long desdites pistes; un moyen (22) pour restituer l'information d'un faisceau modulé de rayonnement ainsi produit en mode de restitution; un moyen (46) de restitution d'adresse pour extraire l'information d'adresse courante de l'information restituée du disque; un moyen (28) pour déplacer le disque d'enregistrement et le faisceau incident de rayonnement l'un relativement à l'autre radialement au disque à une vitesse supérieure à celle pendant le mode de restitution pour forcer le faisceau incident à se déplacer à travers les pistes en mode de recherche; un comparateur (52) pour comparer l'adresse de la piste voulue dudit moyen de sélection (50) à une adresse mise au point avec l'information d'adresse courante dudit moyen de restitution d'adresse (46) pour définir une indication de séparation; et un moyen de commande (60) répondant audit comparateur (52) pour contrôler la vitesse du mouvement relatif pour réduire ladite vitesse tandis que la séparation diminue d'une manière prescrite; caractérisé en ce que ledit moyen de restitution d'adresse (46) sert à surveiller le faisceau modulé pour détecter les adresses mises au point de la piste de l'information restituées pendant au moins une partie du mouvement radial relatif de recherche; et en ce que la vitesse du mouvement relatif est contrôlée de la manière prescrite en réponse à l'information détectée d'adresse mise au point restituée pendant ledit mouvement de recherche.

2. Dispositif selon la revendication 1 comprenant: un moyen (30) de guidage du faisceau pour manipuler ledit faisceau incident pour qu'il suive les pistes de l'information pendant le mode de restitution; un chariot (24) agencé pour provoquer ledit mouvement relatif entre le faisceau incident et le disque pour forcer le faisceau incident à se déplacer d'une piste à l'autre en mode de recherche; un moyen (58) pour inhiber sélectivement le moyen de guidage du faisceau lors du début du mode de recherche; un moniteur (140, 164) pour le faisceau modulé pour détecter le passage de pistes individuelles par ledit faisceau incident pendant le mode de recherche; un compteur répondant audit moniteur et à l'adresse de ladite piste de départ pour calculer l'adresse de la piste sur laquelle on fait impact; ledit comparateur répondant audit moyen de sélection (50) et audit compteur pour comparer l'adresse de la piste voulue aux adresses calculées par le compteur et produire une indication de la séparation entre la piste voulue et le faisceau incident; un moyen (54) pour revalider le moyen de guidage du faisceau à un seuil prescrit; et lorsqu'est atteinte une vitesse prédéterminée relative du chariot, supérieure à celle pendant le mode de restitution, ledit moyen de restitution restitue l'information d'adresse de la piste sur laquelle on fait impact, et ledit comparateur compare l'adresse voulue à l'adresse restituée par ledit moyen de restitution pour déterminer le moment où arrêter le mouvement relativ dudit chariot sur la piste voulue.

3. Dispositif selon la revendication 1 comprenant: un moyen de guidage du faisceau (14, 30) pour manipuler ledit faisceau incident pour qu'il suive les pistes de l'information pendant le mode de restitution; un moyen (58) pour inhiber sélectivement le moyen de guidage du faisceau pendant le mode de recherche et revalider le moyen de guidage du faisceau à un seuil prescrit d'indication de séparation; ledit moyen de commande (60) comprenant un moyen (66—72, 108) pour diminuer progressivement ladite vitesse de mouvement relatif en étapes distinctes à des seuils prescrits qui dépendent de la différence entre l'adresse voulue de la piste et les adresses de la piste restituées en mode de recherche, la dernière desdites étapes distinctes produisant une vitesse radiale du mouvement relatif identique à celle associée à une lecture normale du disque dans ledit mode de restitution, et ledit moyen de revalidation (58) servant à revalider le moyen de guidage du faisceau lors du début de ladite dernière étape distincte, et à maintenir la validation dudit moyen de guidage du faisceau au moins jusqu'à ce que ledit faisceau atteigne ladite piste voulue.

4. Dispositif selon la revendication 1 où ledit moyen de commande diminue la vitesse du mouvement relatif d'une manière échelonnée à des seuils prescrits de séparation.

5. Dispositif selon la revendication 1 comprenant un moyen (3) agencé, lorsque l'adresse voulue est détectée, à provoquer un mode de mouvement d'arrêt où le faisceau incident lit de manière répétée une spire adressée d'une piste en spirale.

6. Dispositif selon la revendication 3 caractérisé en ce que le moyen de restitution d'adresse (46) est agencé pour détecter une adresse de départ correspondant à une piste d'où l'information est restituée en mode de restitution avant qu'un mode de recherche ne soit amorcé.

7. Dispositif selon la revendication 3 ou 6 caractérisé par un moyen (32) agencé quand l'adresse voulue est détectée par le moyen de restitution d'adresse pour provoquer une action de mouvement arrêté où le faisceau incident lit de manière répétée les pistes adressées.

8. Dispositif selon l'une quelconque des revendications 3, 6 ou 7 en combinaison avec un disque portant, sur une surface, des pistes circulaires ou concentriques en spirale de l'information et constituant le disque de stockage de l'information.

9. Procédé pour reproduire sélectivement l'information stockée sur un disque de stockage de l'information qui porte un certain nombre de pistes de l'information lisibles par voie optique comprenant des adresses identifiant de manière unique chaque piste de l'information, ledit procédé comprenant les étapes de: choisir une adresse voulue correspondant à une piste voulue d'où l'information doit être reproduite en mode de restitution; provoquer l'impact d'un faisceau incident de rayonnement sur le disque et le long desdites pistes; restituer l'information d'un faisceau modulé de rayonnement produit ainsi en mode de restitution; extraire l'information d'adresse courante de l'information restituée du disque; déplacer le disque de stockage et le faisceau incident de rayonnement l'un relativement à l'autre radialement au disque à une vitesse plus grande que celle pendant le mode de restitution pour forcer le faisceau incident à se déplacer à travers les pistes en mode de recherche; comparer l'adresse de piste voulue choisie à une adresse mise au point par l'information d'adresse courante de ladite étape d'extraction pour définir une indication de séparation; et contrôler la vitesse du mouvement relatif pour réduire ladite vitesse tandis que la séparation diminue d'une manière prescrite; caractérisé par les étapes de: surveiller le faisceau modulé pour détecter les adresses mises au point de pistes de l'information restituées pendant au moins une partie du mouvement radial relatif de recherche; et contrôler la vitesse du mouvement relatif à la manière prescrite en réponse à l'information d'adresse détectée mise au point restituée pendant ledit mouvement de recherche.

10. Procédé selon la revendication 9 comprenant les étapes de: détecter et compter la traversée de pistes individuelles par ledit faisceau incident pendant les modes de recherche; calculer l'adresse d'une piste sur laquelle on fait actuellement impact à partir de l'adresse de la piste de départ et du compte du nombre de pistes traversées en mode de recherche; comparer l'adresse de la piste voulue aux adresses calculées à ladite étape de calcul pour produire une indication de la séparation entre la piste voulue et le faisceau incident; diminuer la vitesse du mouvement du chariot tandis que la séparation diminue; et lorsqu'est atteinte une vitesse prédéterminée dudit mouvement relatif, encore plus importante que celle pendant le mode de restitution, restituer l'information d'adresse de la piste sur laquelle on fait impact et ensuite comparer l'adresse de la piste voulue à l'adresse restituée dans ladite étape de surveillance pour déterminer quand arrêter ledit mouvement relatif pour placer le faisceau incident sur la piste voulue.

11. Procédé selon la revendication 9 où ladite étape de déplacement est caractérisée par l'étape de diminuer ladite vitesse du mouvement relatif d'une manière échelonnée à des seuils prescrits de séparation.

**0 007 199**

Fig.1

1

0 007 199

Fig. 2

2

*Fig.3*

*Fig.5*

*Fig.6*

Fig.4